# FASCICULE DE BREVET EUROPEEN

(11) **EP 2 481 176 B1**
(45) Date de publication et mention de la délivrance du brevet: **26.11.2014**
(21) Numéro de dépôt: 10763824.9
(22) Date de dépôt: 07.09.2010
(51) Int. Cl.: H04J 3/16, G02B 6/28, H04B 10/27, H04B 10/25, H04J 14/02, H04J 14/08, H04J 14/06

(54) **DISPOSITIF PASSIF MULTIPORTS DE PARTAGE DE SIGNAUX OPTIQUES**
PASSIVE MULTIPORTVORRICHTUNG ZUR VERTEILUNG VON OPTISCHEN SIGNALEN
OPTICAL SIGNAL SHARING PASSIVE MULTIPORT DEVICE

(30) Priorité: 23.09.2009 FR 0956571
(43) Date de publication de la demande: 01.08.2012
(73) Titulaire: Airbus Operations, 31060 Toulouse (FR)
(72) Inventeur: LOPEZ, Juan, F-31330 Grenade (FR); DELORGE, Sébastien, F-31100 Toulouse (FR); TOUYA, Alexandre, F-31500 Toulouse (FR)
(74) Mandataire: Santarelli
(86) Numéro de dépôt international: PCT/FR2010/051856
(87) Numéro de publication internationale: WO 2011/036370

(56) Documents cités:
- US-A- 5 404 241
- US-B1- 6 915 079

## Description

La présente invention concerne les dispositifs de partage de signaux dans un réseau de communication reliant plusieurs équipements, notamment dans un aéronef, permettant à ces équipements d'échanger des données, et plus particulièrement un dispositif passif multiports de partage de signaux optiques.

L'échange d'informations entre des équipements d'un aéronef est une tâche de plus en plus importante en terme de sécurité, que ce soit pour acquérir des valeurs issues de capteurs, pour transmettre des instructions, notamment des commandes de vol, ou pour partager des données entre calculateurs. En particulier, il est nécessaire d'assurer l'intégrité de certaines données échangées tout en garantissant un temps de transfert déterminé. A ces fins, des réseaux de communication spécifiques ont été développés.

Les réseaux de type AFDX (sigle *d'Avionics Full Duplex Switched Ethernet* en terminologie anglo-saxonne) permettent ainsi de relier des capteurs, des actionneurs et des calculateurs. Ce type de réseau, basé sur le protocole Ethernet, met en oeuvre des liens virtuels définis comme des chemins orientés reliant une source à un ou plusieurs destinataires abonnés à ces liens. Les données sont transmises sous forme de trames à travers ces liens. Un identifiant placé dans chaque trame est utilisé pour définir le lien virtuel utilisé.

Pour transmettre des trames dans un réseau de type AFDX, il peut être nécessaire d'utiliser des concentrateurs (appelés *hub* en terminologie anglo-saxonne) et/ou des commutateurs (appelés *switch* en terminologie anglo-saxonne). De façon générale, un concentrateur permet de connecter plusieurs dispositifs sur une même ligne de communication en recopiant chaque trame reçue par un port donné sur chacun des autres ports. Un commutateur diffère d'un concentrateur en ce qu'il détermine dynamiquement les ports sur lesquels doivent être recopiées les trames. Ces dernières sont généralement commutées électriquement sur une couche physique en cuivre.

Les commutateurs utilisés dans les réseaux de communication des aéronefs intègrent des dispositifs électroniques en charge de retransmettre les trames vers tous les abonnés du réseau. Ils doivent donc être alimentés par une source électrique externe.

Un problème propre aux circuits électroniques de ces équipements, prenant une importance toute particulière dans le contexte d'un aéronef, est lié à leur complexité et à leur conception. En effet, ils ont de nombreux modes de pannes possibles qui ont un impact direct sur leur fiabilité, aussi appelée MTBF (sigle de *Mean Time Between Failures* en terminologie anglo-saxonne). En outre, ces modes de pannes obligent à définir des moyens pour les détecter et s'en protéger.

Par ailleurs, ces dispositifs nécessitent une certaine puissance électrique qui entraîne des coûts en terme de poids, notamment de câblage et d'alimentation, ce qui ne peut être négligé dans le contexte d'un aéronef.

Il est observé ici que le monde des télécommunications et des réseaux informatiques utilise des technologies optiques permettant notamment de s'affranchir, dans une certaine mesure, des problèmes de défaillance électrique.

Ainsi, il existe aujourd'hui des standards optiques tels qu'EPON (acronyme d'*Ethernet Passive Optical Networks* en terminologie anglo-saxonne) et GPON (acronyme de *Gigabit Passive Optical Networks* en terminologie anglo-saxonne) dans les technologies des réseaux de communication. Cependant, ils sont définis pour répondre à des besoins propres au secteur des technologies de l'information et ne sont pas directement utilisables dans les aéronefs. Ces standards utilisent des composants optiques passifs tels que des coupleurs et des multiplexeurs qui ne permettent pas de commuter des trames de *n* abonnés vers *n* abonnés. De plus, de telles solutions optiques ne garantissent pas de communications déterministes au sens des réseaux de type AFDX.

Les documents US 6 915 079 et US 5 404 241 divulguant de l'état de la technique pertinent.

L'invention permet de résoudre au moins un des problèmes exposés précédemment en proposant un dispositif passif optique remplissant une fonction de répéteur multiports.

L'invention a ainsi pour objet un dispositif optique passif multiports de partage de signaux optiques permettant de transmettre des signaux reçus par chacun d'une première pluralité de ports dudit dispositif à l'ensemble des ports d'une seconde pluralité de ports dudit dispositif, ce dispositif comprenant les moyens suivants,
- premiers moyens de couplage adaptés à combiner des signaux reçus par chaque port de ladite première pluralité de ports dudit dispositif en un premier signal optique, ledit premier signal optique étant transmis sur un lien optique bidirectionnel ;
- seconds moyens de couplage et moyens de guidage pour rediriger ledit premier signal optique sous forme d'un second signal optique dans ledit lien optique bidirectionnel dans le sens contraire audit premier signal optique, lesdits premiers moyens de couplage étant adaptés à dupliquer ledit second signal optique sur chaque port de ladite seconde pluralité de ports dudit dispositif.

Le dispositif selon l'invention permet ainsi de réduire le périmètre des pannes possibles du dispositif de partage de signaux à des pannes élémentaires telles que la perte de câbles et de s'affranchir de tout mécanisme de supervision. En outre, ce dispositif ne nécessite pas de source électrique, réduisant ainsi les coûts de mise en oeuvre.

Selon un mode de réalisation particulier, le dispositif comprend en outre des moyens de contrôle de polarité pour contrôler la polarité dudit premier signal redirigé selon la polarité dudit premier signal afin d'éviter une dégradation des signaux transmis à chacun des ports de ladite seconde pluralité de ports.

Toujours selon un mode de réalisation particulier, lesdits moyens de guidage comprennent une pluralité de liens optiques, appelés seconds liens optiques, ledit lien optique bidirectionnel étant appelé premier lien optique, et selon lequel lesdits seconds moyens de couplage comprennent en outre des moyens pour dupliquer le premier signal optique sur ladite pluralité de second liens optiques, et pour combiner lesdits premiers signaux optiques issus de chacun desdits seconds liens optiques pour former ledit second signal optique.

L'utilisation de plusieurs guides d'onde pour retransmettre un même signal permet de simplifier les calculs de longueurs des guides d'onde pour éviter que les signaux d'entrée et de sortie du port composite du second coupleur optique ne soient en opposition de phase, pour chaque longueur d'onde du signal transmis. Ainsi, l'utilisation de plusieurs guides d'onde permet de décomposer le problème en plusieurs parties traitées de façon distinctes dans chaque guide d'onde utilisé.

La longueur desdits moyens de guidage est, de préférence, déterminée selon la longueur d'onde des signaux transmis par ledit dispositif de telle façon à ce que les signaux d'entrée et de sortie du port composite du coupleur optique élémentaire ne soient pas en opposition de phase, pour chaque longueur d'onde du signal transmis. En d'autres termes, la longueur du guide d'onde est, de préférence, déterminée en fonction de la longueur de cohérence du signal transmis, pour chaque longueur d'onde considérée.

Toujours selon un mode de réalisation particulier, lesdits premiers et seconds moyens de couplage mettent en oeuvre un mode de multiplexage temporel de signaux. Alternativement, lesdits premiers et seconds moyens de couplage mettent en oeuvre un mode de multiplexage en longueurs d'onde de signaux.

Toujours selon un mode de réalisation particulier, lesdits premiers et/ou seconds moyens de couplage comprennent au moins un coupleur optique ou une pluralité de coupleurs optiques reliés en cascade. Ces composants sont passifs, simple à mettre en oeuvre et opérationnels sans aucune forme d'apprentissage ou de configuration. En outre, ils permettent de travailler sur une large fenêtre spectrale.

Toujours selon un mode de réalisation particulier, lesdits premiers et/ou seconds moyens de couplage comprennent au moins un multiplexeur.

Lesdits signaux partagés peuvent notamment représenter des trames de données de type AFDX.

L'invention a également pour objet un aéronef comprenant le dispositif décrit précédemment.

D'autres avantages, buts et caractéristiques de la présente invention ressortent de la description détaillée qui suit, faite à titre d'exemple non limitatif, au regard des dessins annexés dans lesquels :
- la figure 1 représente schématiquement un réseau de type AFDX dans lequel l'invention est avantageusement mise en oeuvre ;
- la figure 2, comprenant les figures 2a et 2b, illustre un exemple de coupleur optique et de coupleurs optiques reliés en cascade, respectivement, pouvant être utilisés dans le dispositif de partage des signaux illustré sur la figure précédente ;
- la figure 3, comprenant les figures 3a à 3c, illustre schématiquement trois exemples de structure du dispositif optique de partage de signaux illustré sur la figure 1 ;
- la figure 4, comprenant les figures 4a à 4d, illustre le mécanisme de partage des signaux mis en oeuvre dans le dispositif optique de partage de signaux illustré sur la figure 1 ;
- la figure 5, comprenant les figures 5a à 5d, illustre un premier mode de réalisation particulier mettant en oeuvre un mode de multiplexage temporel de signaux (TDM), avec guide d'onde unique, en mono lambda (une seule longueur de cohérence) ;
- la figure 6, comprenant les figures 6a et 6b, illustre les phases d'initialisation et d'utilisation de partage de données selon le mode de réalisation illustré sur la figure 5 ;
- la figure 7, comprenant les figures 7a à 7d, illustre un second mode de réalisation particulier mettant en oeuvre un mode de multiplexage en longueurs d'onde de signaux (WDM), avec plusieurs guides d'ondes (longueurs de cohérence différentes) ;
- la figure 8 représente schématiquement l'architecture d'un dispositif d'un abonné adapté à émettre et à recevoir des données vers et depuis un dispositif optique de partage de signaux conforme au mode de réalisation décrit en référence à la figure précédente.

De façon générale, l'invention a pour objet un dispositif optique passif permettant à *n* abonnés de s'échanger des données. Ce dispositif est, de préférence, adapté à traiter des trames Ethernet répondant au standard IEEE 802.3 mettant en oeuvre le concept de liens virtuels AFDX.

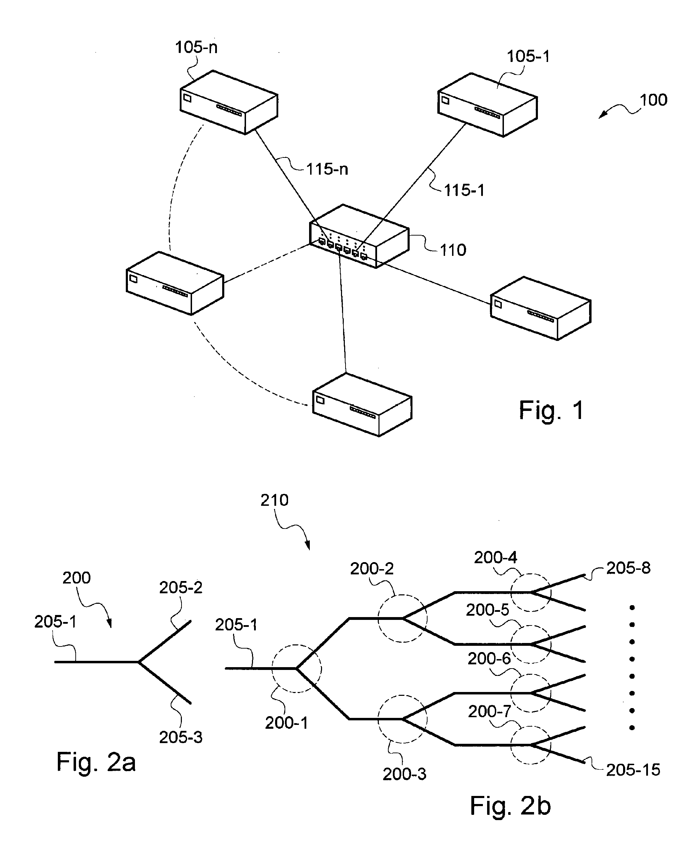

La figure 1 illustre schématiquement un réseau 100 de type AFDX dans lequel l'invention est avantageusement mise en oeuvre. Les abonnés 105-1 à 105-n, par exemple des calculateurs avioniques, sont reliés au dispositif optique passif 110 de partage de signaux, conforme à l'invention, par l'intermédiaire des liens optiques 115-1 à 115-n.

Les *n* abonnés 105-1 à 105-n sont ainsi connectés au dispositif optique 110, ici de type coupleur optique, via des liens optiques 115-1 à 115-n en charge de transporter les trames Ethernet AFDX échangées. Chaque abonné est connecté à un port dédié du dispositif 110. Lorsqu'une trame est reçue sous la forme d'un signal optique, le dispositif 110 est en charge de transmettre ce signal à tous les autres ports, c'est-à-dire à destination de tous les autres abonnés connectés à celui-ci. Pour permettre un auto-contrôle, la trame peut aussi être renvoyée à l'émetteur. Ainsi, la trame est de préférence transmise à tous les ports. D'un point de vue fonctionnel, le dispositif 110 peut être considéré comme équivalent à un concentrateur ayant un support commun optique pour tous les abonnés.

Le dispositif 110 permet ainsi de transmettre toutes les trames reçues, via chacun des ports, à tous les abonnés, sans manipulation des trames et des données. Ce dispositif ne mettant en oeuvre que des composants passifs, par exemple des coupleurs optiques, il doit être considéré comme un transmetteur passif. Il est opérationnel sans aucune forme d'apprentissage ou de configuration.

Il est rappelé ici qu'un coupleur optique est un composant bidirectionnel qui permet de dupliquer un signal ou, à l'inverse, de combiner plusieurs signaux en un. Cependant, lorsqu'un signal est dupliqué, la puissance de chacun des signaux résultant de la duplication est inférieure à celle du signal d'origine. Par exemple, lorsqu'un signal est dupliqué une fois, les deux signaux en résultant ont une puissance d'environ la moitié de celle du signal d'origine pour des coupleur 1/2 3dB (il est possible d'ajuster ce ratio selon les besoins lors de la phase d'industrialisation de ces composants). Néanmoins, ce composant apporte une souplesse importante car il permet de travailler sur une large fenêtre spectrale.

Il est également rappelé ici qu'une fibre optique permet d'établir une communication bidirectionnelle entre deux dispositifs sous certaines conditions. En particulier, deux signaux ayant une même longueur d'onde peuvent être transmis en sens inverse sous forme de signaux ayant des polarisations orthogonales. Il est nécessaire, dans ce cas, de s'assurer que les phases de ces signaux ne sont pas en oppositions.

La figure 2a illustre un exemple de coupleur optique élémentaire 200 pouvant être utilisé dans le dispositif 110. Le coupleur optique élémentaire 200 comprend ici trois ports référencés 205-1 à 205-3. Le port 205-1 est appelé port composite et les ports 205-2 et 205-3 sont appelés ports élémentaires. Si le coupleur optique élémentaire est utilisé dans le sens allant du port composite 205-1 vers les ports élémentaires 205-2 et 205-3, le signal reçu par le port composite 205-1 est dupliqué sur les ports élémentaires 205-2 et 205-3. Inversement, si le coupleur optique élémentaire est utilisé dans l'autre sens (des ports élémentaires 205-2 et 205-3 vers le port composite 205-1), le signal du port composite 205-1 correspond à la combinaison des signaux reçus par les ports élémentaires 205-2 et 205-3. Naturellement, le coupleur optique élémentaire peut être utilisé simultanément dans les deux sens. Le signal de sortie du port composite 205-1 représente alors la combinaison des signaux d'entrée des ports élémentaires 205-2 et 205-3 tandis que les signaux de sortie de ces derniers correspondent au signal d'entrée du port composite 205-1.

Comme illustré sur la figure 2b, plusieurs coupleurs optiques élémentaires 200 peuvent être reliés en cascade. A titre d'illustration, le coupleur optique 210 comprend ici sept coupleurs optiques élémentaires 200-1 à 200-7 tels que celui représenté sur la figure 2a. Le signal de sortie du port composite 205-1 correspond ici à la combinaison des huit signaux d'entrée des ports élémentaires 205-8 à 205-15. Réciproquement, les signaux de sortie des huit ports élémentaires 205-8 à 205-15 correspondent au signal d'entrée du port composite 205-1.

Bien que d'autres types de coupleurs optiques ou d'autres composants, en particulier des multiplexeurs, puissent être utilisés pour former le dispositif optique 110 illustré sur la figure 1, la suite de la description est, dans un but illustratif, basée sur la mise en oeuvre de tels coupleurs optiques et des standards EPON ou GPON. Cependant, alors que ces standards ont une topologie de type « 1 vers *n* », la solution décrite est une solution de type « *n* vers *n* » selon laquelle chaque abonné peut être émetteur et récepteur simultanément.

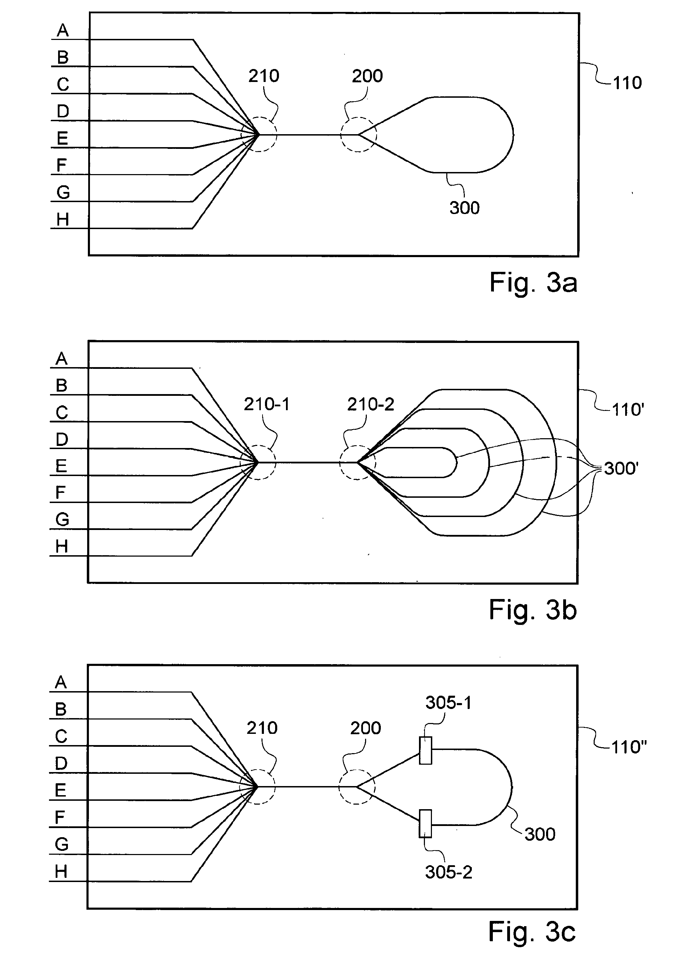

La figure 3, comprenant les figures 3a à 3c, illustre schématiquement la structure d'un dispositif optique de partage de signaux comprenant ici 8 ports bidirectionnels référencés A à H.

A titre d'exemple, le dispositif optique 110 de partage de signaux représenté sur la figure 3a peut être réalisé à partir d'un coupleur optique 210 et d'un coupleur optique élémentaire 200 tels qu'illustrés sur les figures 2a et 2b. Il convient de noter ici qu'il existe de nombreuses technologies (fusion-étirage, planaire, diffusion d'ions, etc.) pour réaliser ce type de fonction.

Comme illustré, le coupleur optique élémentaire 200 et le coupleur optique 210 sont connectés optiquement par leur port composite (c'est-à-dire par celui qui est relié à tous les autres ports). Le dispositif optique 110 comprend en outre un guide d'ondes 300 reliant les deux ports élémentaires du coupleur optique élémentaire 200. Les ports élémentaires du coupleur optique 210 forment les ports de dispositif optique 110.

Le guide d'onde 300 permet de relier la sortie d'un port élémentaire du coupleur optique élémentaire 200 à l'entrée de l'autre port élémentaire et inversement de telle sorte que le signal reçu en entrée du port composite du coupleur optique élémentaire se retrouve en sortie de ce même port.

La longueur du guide d'onde 300 est choisie de telle façon à ce que les signaux d'entrée et de sortie du port composite du coupleur optique élémentaire ne soient pas en opposition de phase, pour chaque longueur d'onde du signal transmis. En d'autres termes, la longueur du guide d'onde 300 doit être déterminée en fonction de la longueur de cohérence du signal transmis, pour chaque longueur d'onde considérée.

Le dispositif optique 110 est ainsi particulièrement adapté à la transmission de signaux mono-lambda, c'est-à-dire n'utilisant qu'une longueur d'onde, pour lesquels la longueur du guide d'onde peut être facilement déterminée.

Le dispositif optique 110' de partage de signaux représenté sur la figure 3b est réalisé à partir de deux coupleurs optiques 210-1 et 210-2 tels que celui illustré sur la figure 2b.

Comme illustré, les deux coupleurs optiques 210-1 et 210-2 sont connectés optiquement par leur port composite. Le dispositif optique 110 comprend en outre plusieurs guides d'ondes 300' reliant deux à deux les ports élémentaires de l'un des coupleurs optiques (ici le coupleur optique 210-2). Les ports élémentaires de l'autre des coupleurs optiques forment les ports du dispositif optique 110.

Comme illustré sur la figure 3b, le flux des *n* abonnés est concentré en un seul signal dans le premier coupleur optique puis réparti, à l'aide du second coupleur optique, dans plusieurs guides d'onde de telle sorte que ce signal soit retransmis à chaque abonné. Le nombre de guide d'onde est égal à la moitié du nombre de ports élémentaires du second coupleur optique. Ce dernier peut avoir autant de ports élémentaires que le premier coupleur optique ou non.

L'intérêt de l'utilisation de plusieurs guides d'onde pour retransmettre un même signal réside essentiellement dans le calcul de la longueur des guides d'onde pour éviter que les signaux d'entrée et de sortie du port composite du second coupleur optique ne soient en opposition de phase, pour chaque longueur d'onde du signal transmis. En effet, si les longueurs d'ondes utilisées sont telles qu'il est difficile de déterminer la longueur d'un seul guide d'onde compatible avec la qualité optique requise du dispositif de partage de signaux et son encombrement physique, l'utilisation de plusieurs guides d'onde permet de décomposer le problème en plusieurs parties traitées de façon distinctes dans chaque guide d'onde utilisé.

Le dispositif optique 110' est ainsi particulièrement adapté à la transmission de signaux multi-lambda, c'est-à-dire utilisant plusieurs longueurs d'ondes pour lesquels la longueur d'un seul guide d'onde ne permettrait pas d'atteindre l'objectif souhaité, notamment en termes de qualité de signal et/ou de dimension du dispositif optique.

Le dispositif optique 110" de partage de signaux représenté sur la figure 3c est réalisé à partir d'un coupleur optique 210' et d'un coupleur optique élémentaire 200' tels qu'illustrés sur les figures 2a et 2b.

Comme illustré, le coupleur optique élémentaire 200' et le coupleur optique 210' sont connectés optiquement par leur port composite (c'est-à-dire par celui qui est relié à tous les autres ports). Le dispositif optique 110" comprend en outre un guide d'ondes 300 reliant les deux ports élémentaires du coupleur optique élémentaire 200'. Les ports élémentaires du coupleur optique 210' forment les ports de dispositif optique 110".

Des modules de contrôle de polarisation 305-1 et 305-2, de préférence passifs, sont ici ajoutés à chaque entrée des ports élémentaires du coupleur optique élémentaire 200' pour que la polarisation du signal réinjecté soit orthogonale à la polarisation du signal d'entrée afin d'éviter une dégradation des signaux transmis à chacun des abonnés.

Comme en ce qui concerne le dispositif optique 110, le guide d'onde 300 permet de relier la sortie d'un port élémentaire du coupleur optique élémentaire 200' à l'entrée de l'autre port élémentaire et inversement de telle sorte que le signal reçu en entrée du port composite du coupleur optique élémentaire se retrouve en sortie de ce même port.

Il doit être observé ici que des modules de contrôle de polarisation peuvent être mis en oeuvre lorsque plusieurs guides d'onde sont utilisés.

Ainsi, comme illustré sur les figures 3a à 3c, par le biais de coupleurs optiques basiques et avec l'adjonction de guides d'ondes, il est possible de former un composant ayant une topologie en étoile qui assure des communications de *n* vers *n* abonnés et donc, en particulier, d'un sous-ensemble des *n* abonnés vers un autre sous ensemble, similaire ou différent, des *n* abonnés. Le dispositif formé fonctionne de façon passive pour transporter des signaux ayant une même longueur d'onde (mode mono-lambda) ou plusieurs longueurs d'ondes différentes (mode multi-lambda). En outre, les échanges de données peuvent être bidirectionnels sans collision, grâce aux propriétés intrinsèques de la fibre.

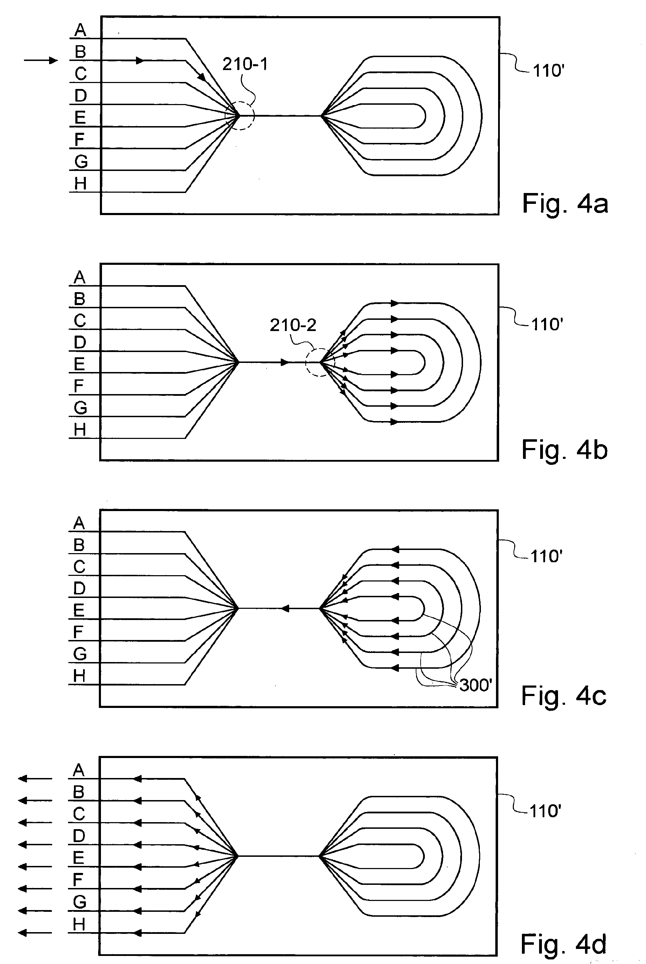

Un tel mécanisme est illustré de façon générale sur la figure 4, comprenant les figures 4a à 4d, lorsqu'un signal est reçu d'un abonné. Le dispositif optique de partage de signaux utilise ici plusieurs guides d'ondes.

Comme illustré sur la figure 4a, un signal optique reçu sur le port B du dispositif optique 110' est transmis au premier coupleur optique 210-1 pour être combiné avec les autres signaux reçus par les autres ports du dispositif 110. Aucun autre port ne recevant de signal, seul ce signal est transmis au second coupleur optique 210-2 où il est répliqué sur chacun des ports élémentaires du second coupleur optique (figure 4b).

Le signal étant ensuite redirigé par chaque guide d'onde 300', il est reçu par chacun des ports élémentaires du second coupleur optique dans lequel ces signaux sont combinés pour être transmis au premier coupleur optique (figure 4c). Il est observé ici que les signaux transmis par chaque guide d'onde étant identiques, le signal résultant de leur combinaison leur est similaire.

Le signal reçu sur le port composite du premier coupleur optique est ensuite dupliqué sur chacun de ses ports élémentaires, c'est-à-dire sur chacun des ports A à H du dispositif optique 110' (figure 4d).

Comme indiqué précédemment, l'utilisation de coupleurs optiques réduit la puissance des signaux transmis. Ainsi, la puissance optique envoyée par un abonné sur le médium est typiquement divisée par n. A titre d'illustration, le plus classique des coupleurs optiques 1 vers 2 introduit une atténuation de 3dB entre le signal du port composite et les signaux transitant sur les ports élémentaires.

Par ailleurs, pour limiter le facteur de perte du signal, il est nécessaire de contrôler le rayon de courbure du ou des guides d'onde. Il est observé ici que l'atténuation liée à la longueur des guides d'onde est négligeable en raison de leurs faibles longueurs.

En d'autres termes, les deux paramètres déterminants dans les dispositifs optiques 110, 110' et 110" pour le calcul de la puissance des signaux optiques sont le nombre d'abonnés (comme indiqué précédemment, 3dB peuvent être perdues chaque fois que le signal est dupliqué équitablement sur deux ports) et le rayon de courbure (les fibres ne sont pas conçues pour être tordues et faire une boucle en sens inverse). Par conséquent, selon les propriétés des fibres utilisées, il peut être nécessaire d'adapter le composant pour trouver un compromis entre la topologie, le nombre d'abonnés et les caractéristiques du composant, notamment ses dimensions.

Selon un mode de réalisation particulier, un mode de multiplexage temporel des signaux d'accès de type TDMA (sigle de *Time Division Multiple Access* en terminologie anglo-saxonne) peut être mis en oeuvre pour garantir un accès au réseau à tous les abonnés, tour à tour, en utilisant une longueur d'onde unique λ. Les mêmes sources peuvent ainsi être utilisées pour tous les abonnés, permettant une communication déterministe. Un en-tête est avantageusement ajouté à chaque trame pour permettre la synchronisation des abonnés.

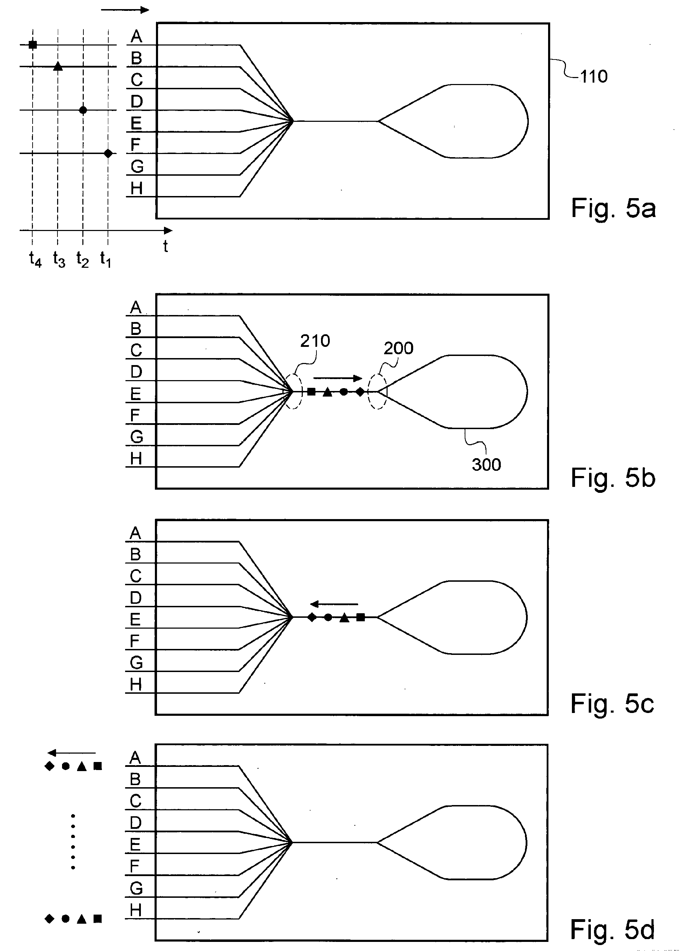

La figure 5, comprenant les figures 5a à 5d, illustre un tel mode de réalisation mettant en oeuvre un mode de multiplexage temporel de signaux (TDM), avec guide d'onde unique, en mono lambda (une seule longueur de cohérence)

Comme illustré sur la figure 5a, le dispositif optique 110, similaire ici au dispositif représenté sur la figure 3a, reçoit, sur les ports A, B, D et F, quatre signaux distincts représentés par un carré, un triangle, un rond et un losange, aux instants t₄, t₃, t₂ et t₁, respectivement.

Ces signaux sont combinés dans le coupleur optique 210 pour former le signal représenté par le losange suivi du rond, du triangle et du carré. Ce signal est alors transmis au guide d'onde 300 par le coupleur optique élémentaire 200 (figure 5b).

Après avoir transité par le guide d'onde 300 et le coupleur optique élémentaire 200, le signal est transmis au coupleur optique 210 (figure 5c) où le signal est répliqué sur chaque port du dispositif optique 110 (figure 5d).

Il est à nouveau observé ici que les signaux traités par le dispositif optique 110 ont une longueur d'onde unique.

De façon avantageuse, la mise en oeuvre du dispositif optique 110 selon ce mode de réalisation est réalisée selon deux phases, une phase d'initialisation et une phase d'utilisation.

Durant la phase d'initialisation, aucun abonné n'est synchronisé. Des collisions entre les données échangées sont possibles. Lorsque les abonnés détectent une collision, ils attendent chacun un temps différent et, de préférence, aléatoire avant de réémettre une donnée. Ce temps est augmenté en cas de nouvelle collision jusqu'à ce qu'au moins la moitié des abonnés réussissent leurs émissions.

Tout en ayant un objectif identique visant à déterminer l'intervalle durant lequel chaque abonné peut émettre des données, la phase d'initialisation peut être différente. En particulier, elle peut être contrôlée par un système centralisé ou comprendre le paramétrage des abonnés selon des paramètres prédéterminés.

Durant la phase d'utilisation, tous les abonnés émettent à tour de rôle selon des intervalles de temps identiques, statiques et prédéfinis. Chaque message contient, de préférence, un entête pour permettre la synchronisation. Les abonnés connaissent à l'avance leur position dans un train TDMA, aussi appelé *round* TDMA, et savent ainsi précisément à quel moment émettre.

Comme indiqué précédemment, il est considéré ici que la phase d'utilisation débute lorsqu'un nombre prédéterminé d'abonnés, par exemple la moitié, émettent correctement dans leur intervalle de temps et sans collision. A partir de là, ceux qui ne sont toujours pas synchronisés reçoivent les indications de temps des abonnés synchronisés et peuvent en déduire un intervalle de temps disponible pour émettre des données.

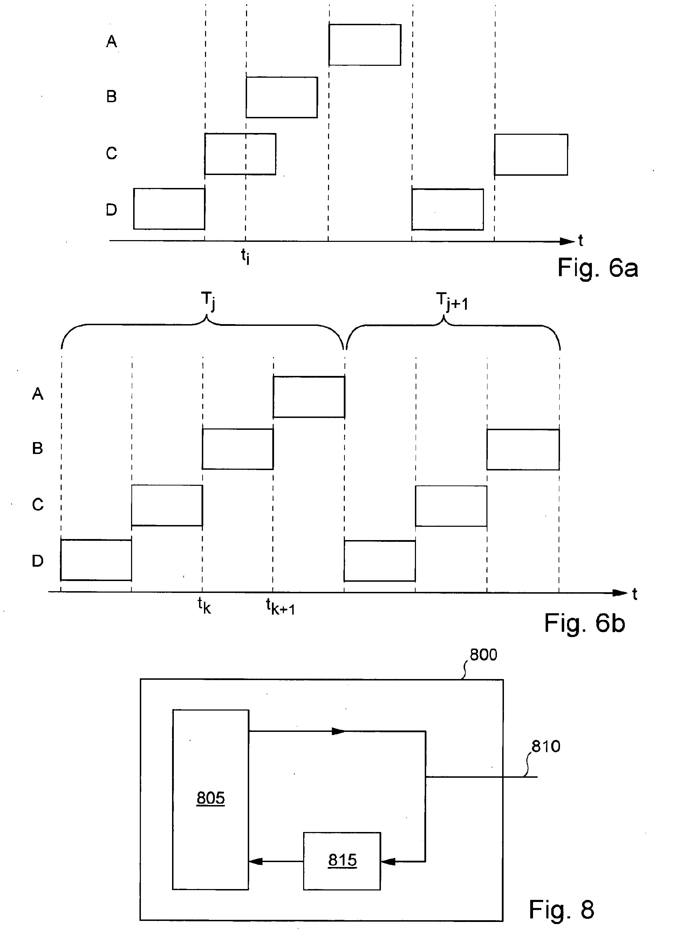

La figure 6, comprenant les figures 6a et 6b, illustre un exemple de trains TDMA lorsque des abonnés connectés à un dispositif optique conforme à l'invention comprenant quatre ports (A, B, C et D) ne sont pas synchronisé et lorsqu'ils sont synchronisés, respectivement.

Comme illustré sur la figure 6a, une collision se produit à l'instant tᵢ entre les données émises par les abonnés reliés aux ports B et C. Dans ce cas, selon l'exemple d'initialisation donné précédemment, la phase d'initialisation se poursuit si moins de la moitié des abonnés émettent correctement des données dans leur intervalle de temps et sans collision. Dans le cas contraire, la phase d'utilisation est mise en oeuvre et les abonnés non synchronisés utilisent les informations reçues des autres abonnés pour se synchroniser.

La figure 6b illustre les données émises par les abonnés reliés aux ports A à D, durant la phase d'utilisation, lorsque tous les abonnés sont synchronisés. Comme illustré, chaque abonné peut transmettre des données dans un intervalle de temps qui lui est alloué dans chaque train TDMA. A titre d'illustration, l'abonné relié au port B peut émettre des données entre les instants tₖ et tₖ₊₁ du train TDMA Tⱼ.

Selon un autre mode de réalisation particulier, un mode de multiplexage en longueurs d'onde de type WDMA (sigle de *Wavelength Division Multiple Access* en terminologie anglo-saxonne) peut être mis en oeuvre pour permettre à tous les abonnés d'accéder simultanément au réseau en utilisant des longueurs d'onde différentes. Chaque abonné possède ici un ou plusieurs filtres en longueurs d'onde pour différencier les signaux reçus.

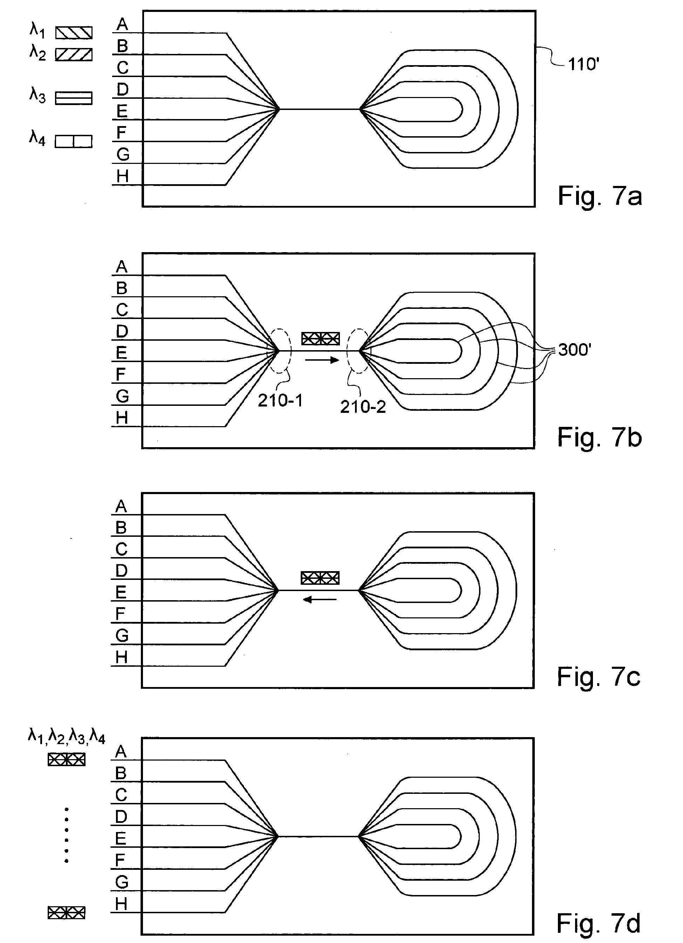

La figure 7, comprenant les figures 7a à 7d, illustre un tel mode de réalisation mettant en oeuvre un mode de multiplexage en longueurs d'onde de signaux (WDM), avec plusieurs guides d'ondes (longueurs de cohérence différentes).

Comme illustré sur la figure 7a, le dispositif optique 110', similaire ici à celui représenté sur la figure 3b, reçoit, sur les ports A, B, D et F, quatre signaux ayant des longueurs d'onde distinctes, notées λ₁, λ₂, λ₃ et λ₄, respectivement.

Ces signaux sont combinés dans le coupleur optique 210-1 pour former un signal unique basé sur quatre longueurs d'onde. Ce signal est alors transmis à chaque guide d'onde 300' par le coupleur optique 210-2 (figure 7b).

Après avoir transité par les guides d'onde 300' et le coupleur optique 210-2, le signal est transmis au coupleur optique 210-1 (figure 7c) où le signal est répliqué sur chaque port du dispositif optique 110' (figure 7d).

Le signal optique obtenu en sortie sur chaque port du dispositif optique 110' est donc basé sur les longueurs d'onde λ₁, λ₂, λ₃ et λ₄.

Comme indiqué précédemment, les abonnés comprennent chacun au moins un filtre en longueurs d'onde pour extraire au moins un signal ayant une longueur d'onde prédéterminée du signal reçu.

La figure 8 représente schématiquement l'architecture d'un dispositif 800 d'un abonné, par exemple un calculateur, adapté à émettre et à recevoir des données vers et depuis un dispositif optique conforme au second mode de réalisation décrit.

Le dispositif 800 comprend ici une unité de traitement 805 adaptée à traiter des signaux optiques. A titre d'illustration, l'unité de traitement 805 comprend un convertisseur de signaux optiques/électriques, une unité de calcul (CPU, sigle de *Central Processing Unit* en terminologie anglo-saxonne), une mémoire morte (ROM, acronyme de *Read Only Memory* en terminologie anglo-saxonne) pouvant comporter les programmes, une mémoire vive ou mémoire cache (RAM, acronyme de *Random Access Memory* en terminologie anglo-saxonne) comportant des registres adaptés à enregistrer des variables et paramètres créés et modifiés au cours de l'exécution des programmes précités et une interface de communication adaptée à transmettre et à recevoir des données vers et depuis un réseau de communication, filaire ou non. L'unité de traitement 805 peut également disposer d'un disque dur pouvant comporter les programmes précités et des données traitées ou à traiter et un lecteur de cartes mémoires ou tout autre système de stockage externe de données. Une partie du dispositif 805 correspond ainsi à une interface réseau entre le dispositif optique et le calculateur.

L'unité de traitement 805 permet de générer des signaux optiques pouvant être transmis au dispositif optique conforme au second mode de réalisation décrit via le lien optique 810.

Le dispositif 800 comprend en outre au moins un démultiplexeur/filtre 815, qui permet d'extraire un ou plusieurs signaux ayant des longueurs d'onde particulières d'un signal reçu par le lien optique 810. A titre d'illustration, le démultiplexeur/filtre 815 peut extraire l'un des signaux ayant une longueur d'onde λ₁, λ₂, λ₃ ou λ₄ à partir du signal reçu transmis par le dispositif optique 110 illustré sur la figure 7d.

Naturellement, pour satisfaire des besoins spécifiques, une personne compétente dans le domaine de l'invention pourra appliquer des modifications dans la description précédente.

## Revendications

1. Dispositif optique passif multiports (110, 110', 110") de partage de signaux optiques permettant de transmettre des signaux reçus par chacun d'une première pluralité de ports dudit dispositif à l'ensemble des ports d'une seconde pluralité de ports dudit dispositif, ce dispositif étant **caractérisé en ce qu'**il comprend les moyens suivants,
- premiers moyens de couplage (210, 210-1) adaptés à combiner des signaux reçus par chaque port de ladite première pluralité de ports dudit dispositif en un premier signal optique, ledit premier signal optique étant transmis sur un lien optique bidirectionnel ;
- seconds moyens de couplage et moyens de guidage (200, 210-2, 300, 300') pour rediriger ledit premier signal optique sous forme d'un second signal optique dans ledit lien optique bidirectionnel dans le sens contraire audit premier signal optique, lesdits premiers moyens de couplage étant adaptés à dupliquer ledit second signal optique sur chaque port de ladite seconde pluralité de ports dudit dispositif.

2. Dispositif selon la revendication 1 comprenant en outre des moyens de contrôle de polarité (305-1, 305-2) pour contrôler la polarité dudit premier signal redirigé selon la polarité dudit premier signal.

3. Dispositif selon la revendication 1 ou la revendication 2 selon lequel lesdits moyens de guidage comprennent une pluralité de liens optiques, appelés seconds liens optiques, ledit lien optique bidirectionnel étant appelé premier lien optique, et selon lequel lesdits seconds moyens de couplage comprennent en outre des moyens (210-2) pour dupliquer le premier signal optique sur ladite pluralité de second liens optiques, et pour combiner lesdits premiers signaux optiques issus de chacun desdits seconds liens optiques pour former ledit second signal optique.

4. Dispositif selon l'une quelconque des revendications précédentes selon lequel la longueur desdits moyens de guidage est déterminée selon la longueur d'onde des signaux transmis par ledit dispositif.

5. Dispositif selon l'une quelconque des revendications précédentes selon lequel lesdits premiers et seconds moyens de couplage mettent en oeuvre un mode de multiplexage temporel de signaux.

6. Dispositif selon l'une quelconque des revendications 1 à 4 selon lequel lesdits premiers et seconds moyens de couplage mettent en oeuvre un mode de multiplexage en longueurs d'onde de signaux.

7. Dispositif selon l'une quelconque des revendications précédentes selon lequel lesdits premiers et/ou seconds moyens de couplage comprennent au moins un coupleur optique ou une pluralité de coupleurs optiques reliés en cascade.

8. Dispositif selon l'une quelconque des revendications précédentes selon lequel lesdits premiers et/ou seconds moyens de couplage comprennent au moins un multiplexeur.

9. Dispositif selon l'une quelconque des revendications précédentes selon lequel lesdits signaux optiques représentent des trames de données de type AFDX.

10. Aéronef comprenant le dispositif selon l'une quelconque des revendications précédentes.

## Patentansprüche

1. Passive, optische Multiportvorrichtung (110, 110', 110") zur Verteilung von optischen Signalen, mit der es möglich ist, Signale, die von jedem einer ersten Mehrzahl von Ports der Vorrichtung empfangen wurden, an die Gesamtheit an Ports einer zweiten Mehrzahl von Ports der Vorrichtung zu übertragen, wobei diese Vorrichtung
**dadurch gekennzeichnet ist, dass** sie die nachstehenden Mittel aufweist:
- erste Kopplungsmittel (210, 210-1), die dazu geeignet sind, die von jedem Port der ersten Mehrzahl an Ports der Vorrichtung empfangenen Signale zu einem ersten optischen Signal zu kombinieren, wobei das erste optische Signal über eine bidirektionale optische Verbindung übertragen wird;
- zweite Kopplungsmittel und Führungsmittel (200, 210-2, 300, 300'), um das erste optische Signal in Form eines zweiten optischen Signals in der bidirektionalen optischen Verbindung in entgegengesetzter Richtung zum ersten optischen Signal weiterzuleiten, wobei die ersten Kopplungsmittel dazu geeignet sind, das zweite optische Signal an jedem Port der zweiten Mehrzahl von Ports der Vorrichtung zu duplizieren.

2. Vorrichtung nach Anspruch 1,
ferner enthaltend Polaritätskontrollmittel (305-1. 305-2) zum Kontrollieren der Polarität des ersten Signals, das je nach Polarität des ersten Signals weitergeleitet wird.

3. Vorrichtung nach Anspruch 1 oder Anspruch 2, wobei die Führungsmittel eine Mehrzahl von optischen Verbindungen, zweite optische Verbindungen genannt, aufweisen, wobei die bidirektionale optische Verbindung erste optische Verbindung genannt wird, und wobei die zweiten Kopplungsmittel ferner Mittel (210-2) aufweisen, um das erste optische Signal an der Mehrzahl von zweiten optischen Verbindungen zu duplizieren und um die ersten optischen Signale, die von jeder der zweiten optischen Verbindungen stammen, zum Bilden des zweiten optischen Signals zu kombinieren.

4. Vorrichtung nach einem der vorangehenden Ansprüche,
wobei die Länge der Führungsmittel je nach Wellenlänge der über die Vorrichtung übertragenen Signale bestimmt wird.

5. Vorrichtung nach einem der vorangehenden Ansprüche,
wobei die ersten und die zweiten Kopplungsmittel einen Modus zur Zeitmultiplexierung der Signale durchführen.

6. Vorrichtung nach einem der Ansprüche 1 bis 4,
wobei die ersten und die zweiten Kopplungsmittel einen Modus zur Wellenlängenmultiplexierung der Signale durchführen.

7. Vorrichtung nach einem der vorangehenden Ansprüche,
wobei die ersten und/oder zweiten Kopplungsmittel zumindest einen optischen Koppler bzw. eine Mehrzahl von optischen Kopplern aufweisen, die in Kaskade geschaltet sind.

8. Vorrichtung nach einem der vorangehenden Ansprüche,
wobei die ersten und/oder zweiten Kopplungsmittel zumindest einen Multiplexer aufweisen.

9. Vorrichtung nach einem der vorangehenden Ansprüche,
wobei die optischen Signale Datenrahmen vom Typ AFDX darstellen.

10. Luftfahrzeug mit einer Vorrichtung nach einem der vorangehenden Ansprüche.

## Claims

1. Multiport passive optical device (110, 110', 10") for optical signal sharing making it possible to transmit signals received by each of a first plurality of ports of the said device to all of the ports of a second plurality of ports of the said device, this device being **characterized in that** it comprises the following means,
- first coupling means (210,210-1) adapted for combining signals received by each port of the said first plurality of ports of the said device into a first optical signal, the said first optical signal being transmitted over a bidirectional optical link;
- second coupling means and guide means (200,210-2,300,300') for redirecting the said first optical signal in the form of a second optical signal into the said bidirectional optical link in the direction opposite to the said first optical signal, the said first coupling means being adapted for duplicating the said second optical signal on each port of the said second plurality of ports of the said device.

2. Device according to claim 1, further comprising polarity control means (305-1, 305-2) for controlling the polarity of the said first redirected signal according to the polarity of the said first signal.

3. Device according to claim 1 or claim 2, according to which the said guide means comprise a plurality of optical links, called second optical links, the said bidirectional optical link being called first optical link, and according to which the said second coupling means further comprise means (210-2) for duplicating the first optical signal on the said plurality of second optical links, and for combining the said first optical signals originating from each of the said second optical links in order to form the said second optical signal.

4. Device according to any one of the preceding claims, according to which the length of the said guide means is determined according to the wavelength of the signals transmitted by the said device.

5. Device according to any one of the preceding claims, according to which the said first and second coupling means implement a signal time-division multiplexing mode.

6. Device according to any one of claims 1 to 4, according to which the said first and second coupling means implement a signal wavelength-division multiplexing mode.

7. Device according to any one of the preceding claims, according to which the said first and/or second coupling means comprise at least one optical coupler or a plurality of optical couplers connected in cascade.

8. Device according to any one of the preceding claims, according to which the said first and/or second coupling means comprise at least one multiplexer.

9. Device according to any one of the preceding claims, according to which the said optical signals represent AFDX-type data frames.

10. Aircraft comprising the device according to any one of the preceding claims.
